# EUROPÄISCHE PATENTSCHRIFT

(11) **EP 2 295 211 B1**
(45) Veröffentlichungstag und Bekanntmachung des Hinweises auf die Patenterteilung: **03.05.2017**
(21) Anmeldenummer: 10009525.6
(22) Anmeldetag: 14.09.2010
(51) Int. Cl.: B23D 61/00, B27B 19/00

(54) **Oszillationssäge**
Oscillation saw
Scie à oscillations

(30) Priorität: 15.09.2009 DE 102009004114
(43) Veröffentlichungstag der Anmeldung: 16.03.2011
(73) Patentinhaber: WSEngineering GmbH & Co. KG, 78054 Villingen-Schwenningen (DE)
(72) Erfinder: Lay, Dr. Norbert, 78054 Villingen-Schwennignen (DE)
(74) Vertreter: Herden, Andreas F.

(56) Entgegenhaltungen:
- EP-A1- 1 625 909
- EP-A1- 1 736 107
- EP-A2- 1 190 800
- DE-C- 354 343
- FR-A- 986 764
- US-A- 3 978 862

## Beschreibung

### Gebiet der Erfindung

Die Erfindung betrifft eine Oszillationssäge gemäß dem Oberbegriff des Anspruchs 1. Eine solche Oszillationssäge ist der EP 19 74 881 A2 zu entnehmen.

### Hintergrund der Erfindung

Oszillationssägen sind bekannt. Bei einem Oszillationssägewerkzeug ist ein Sägeblatt an einer Antriebswelle befestigt und wird über die Antriebswelle in eine oszillierende Schwingung mit geringem Hub versetzt, in der Regel mit einem Hub von unter 5°. Ursprünglich wurden Oszillationssägen für medizinische Anwendungen entwickelt, damit man mit diesen Werkzeugen Gips schneiden kann, ohne die Haut des Patienten zu verletzen. Das Prinzip der Oszillationssäge wurde in der Folge auf Werkzeuge zum Schneiden von Holz, Gipsplatten und Verbundwerkstoffen ausgedehnt.

Ein Oszillationssägeblatt ist beispielsweise in der europäischen Offenlegungsschrift EP 19 74 881 A2 beschrieben. Es handelt sich dabei um ein Sägeblatt, welches, um gerade Schnitte zu setzen, eine Schneide mit auf einer Geraden angeordneten Zähne aufweist. Durch die Schneide wird die senkrecht zur Schneide verlaufende Schnittrichtung definiert. Die Schneide befindet sich an einer Platte, an der ein abgewinkelter Basisabschnitt angrenzt. Über den abgewinkelten Basisabschnitt lässt sich das Sägeblatt an einem Adapter einspannen, welcher seinerseits mit der Antriebswelle eines Oszillationswerkzeugs verbunden wird.

Die Belastungen an einem Oszillationssägeblatt sind insbesondere beim Schneiden von Holz, welches beispielsweise auch Nägel oder Schrauben umfassen kann, sowie beim Schneiden von Verbundwerkstoffen hoch. So waren Oszillationssägewerkzeuge, welche für den Handwerkerbereich geeignet sind, nur durch die Verwendung von hochfesten Materialien, insbesondere angeschweißten Schneiden aus Hartmetall, zu realisieren.

Es hat sich in der Praxis gezeigt, dass es insbesondere beim Setzen von tiefen Schnitten zu einer hohen Reibung des Sägeblatts und zu starken Vibrationen kommen kann. Dadurch kommt es zu einer schlechteren Schnittleistung, einer stärkeren Beanspruchung des Antriebs und die Vibrationen sind für den Benutzer unangenehm.

Aus der Offenlegungsschrift EP 1 736 107 A1 ist eine mittels eines Piezo in eine Schwingung versetzbare Säge für die Mikrochirurgie bekannt.

Die Offenlegungsschrift FR 986 764 A zeigt einen Fuchsschwanz, dessen Sägeblatt an mehreren Seiten Zähne aufweist.

### Aufgabe der Erfindung

Der Erfindung liegt gegenüber vorstehend beschriebenem Stand der Technik die Aufgabe zugrunde, die Schnittleistung eines Oszillationssägeblatts, welches insbesondere zum Schneiden von Holz, Metall und Verbundwerkstoffen ausgebildet ist, weiter zu verbessern.

### Zusammenfassung der Erfindung

Die Aufgabe der Erfindung wird bereits durch eine Oszillationssäge nach Anspruch 1 gelöst.

Bevorzugte Ausführungsformen und Weiterbildungen der Erfindung sind den Unteransprüchen zu entnehmen.

Die Erfindung betrifft eine Oszillationssäge mit einem Oszillationssägeblatt mit einer Zähne umfassenden Hauptschneide, wobei das Oszillationssägeblatt an der der Hauptschneide gegenüberliegenden Seite Mittel zur Befestigung an einem Oszillationssägewerkzeug aufweist.

Es versteht sich, dass die Befestigungsmittel nicht genau randseitig angeordnet sein müssen, so kann als Befestigungsmittel beispielsweise eine Aussparung im hinteren Bereich des Sägeblatts vorgesehen sein, die formschlüssig an der Antriebswelle eines Oszillationssägewerkzeugs befestigt werden kann.

Durch die Hauptschneidewird die Schnittrichtung des Sägeblatts bestimmt. So verläuft die Schnittrichtung, wie es bei gattungsbildenden Oszillationssägeblättern üblich ist, senkrecht zur Hauptschneide. Es versteht sich, dass in der Praxis das handgeführte Werkzeug zwar auch schräg geführt werden kann, wobei für den Vorschub die senkrecht zur Hauptschneideverlaufende Kraftkomponente entscheidend ist.

Gemäß der Erfindung umfasst das Oszillationssägeblatt an seinen quer zur Hauptschneideverlaufenden Seiten Zähne umfassende Nebenschneiden.

Der Erfinder hat herausgefunden, dass die Schnittleistung eines Oszillationssägeblatts verbessert werden kann, wenn das Oszillationssägeblatt auch an seinen Seiten mit Zähnen versehen ist. Die Nebenschneiden dienen dabei im Wesentlichen nicht als Zusatzschneiden zum Sägen, etwa durch Bewegung des Werkzeugs in seitlicher Richtung. Vielmehr scheinen durch die Nebenschneiden insbesondere große Späne zerkleinert und so leichter nach hinten abgeführt zu werden. Die Reibung beim Setzen von tiefen Schnitten kann so reduziert werden.

Weiter führen die Zähne, durch welche die Kontaktfläche beim seitlichen Anstoßen des Sägeblatts im Material verkleinert wird, vermutlich zu einem reduzierten Kraftschlag. Insbesondere spitz ausgebildete Zähne können sich seitlich in das zu bearbeitende Material drücken, so dass das Sägblatt weniger stark seitlich anschlägt. Hierdurch werden vermutlich die Belastung des Antriebs sowie Vibrationen des Sägeblatts, welche sich über den Antrieb bis zum Griff des Gerätes ausbreiten, reduziert. Bei einer bevorzugten Ausführungsform der Erfindung weisen die Nebenschneiden eine andere Zahnung wie die Hauptschneide auf.

So ist die Hauptschneide in der Regel auf eine hohe Schnittleistung optimiert. Je nach Verwendungszweck kann es sich dabei beispielsweise um eine Japan-Verzahnung zum Schneiden von Holz, um geschränkte Zahnungen sowie um Zähne zum Schneiden von Metallen handeln. Eine Vielzahl variabler Möglichkeiten zum Herstellen von Verzahnungen ergibt sich aus dem Stand der Technik, ohne dass darauf näher eingegangen wird.

Die Zahnung der Nebenschneiden kann dagegen auf einen optimalen Abtransport der Späne und/oder auf einen reduzierten Kraftschlag beim seitlichen Kontakt des Werkzeugs mit dem zu bearbeiteten Material optimiert sein.

Insbesondere sind die Zähne der Nebenschneiden als Ausräumzähne ausgebildet, dienen also bevorzugt dem Abtransport und/oder der Zerkleinerung von Spänen und nicht als Schneiden zum Bearbeiten des Materials.

Dazu ist bei einer bevorzugten Ausführungsform der Erfindung vorgesehen, dass die Flanken der Nebenschneiden auf die der Schnittrichtung abgewandten Seite steiler ausgebildet sind als die Flanken, die der Schnittrichtung zugewandt sind. Durch eine derartige Ausbildung der Nebenschneiden wird die Ausräumwirkung der Nebenschneiden verbessert.

Bei einer bevorzugten Ausführungsform der Erfindung verlaufen die Flanken der Nebenschneiden auf der der Schnittrichtung abgewandten Seite in einem Winkel zwischen 30 und 110°, bevorzugt zwischen 50° und 80° zur Schnittrichtung des Sägeblatts.

Bei einer Weiterbildung der Erfindung sind die Zähne der Hauptschneide geschränkt, wohingegen die Zähne der Nebenschneiden keine Schränkung aufweisen. Durch eine geschränkte Hauptschneide kann zusätzlich die Schnittleistung verbessert und/oder die Neigung des Sägeblatts zum Verklemmen reduziert werden.

Da es sich bei der Zahnung der Nebenschneiden um eine Verzahnung, mittels der Schnitte ausgeführt werden, handelt, wird bei den Nebenschneiden auf eine Schränkung der Zähne verzichtet. Bei den Nebenschneiden könnte eine Schränkung sogar nachteilige Auswirkung haben, da durch die Schränkung die Höhe des Sägeblatts im Bereich der jeweiligen Schneide vergrößert wird. Eine derart vergrößerte Höhe ist bei den Nebenschneiden, welche zum Ausräumen und/oder Verringern des Kraftschlags dienen, unerwünscht.

Gemäß der Erfindung bestehen zumindest die Spitzen der Hauptschneiden aus einem anderen Material wie das angrenzende Sägeblatt.

Insbesondere ist vorgesehen, dass das Sägeblatt eine angeschweißte Hauptschneideaus hochlegiertem Stahl, insbesondere HSS-Stahl aufweist. Eine derartige Ausbildung wird auch als Bimetall bezeichnet. Die an die Schneide angrenzende Platte besteht dabei aus einem weicheren und flexibleren Material, wohingegen die Zähne aus einem festeren Material ausgebildet sind. Durch eine derartige Verzahnung aus Bimetall kann die Schnittleistung und Standzeit des Sägeblatts erheblich verbessert werden.

Die Zähne der Nebenschneiden bestehen dagegen erfindungsgemäß aus demselben Material wie die angrenzende Platte. Es ist daher möglich, die Zahnung der Nebenschneiden auf besonders einfache Weise, etwa durch Ausstanzen oder Ausschneiden, herzustellen. Die Bereitstellung der Ausräumverzahnung ist insbesondere bei einer Herstellung durch Stanzen daher nicht mit einem höheren Fertigungsaufwand verbunden als die Herstellung eines Sägeblatts mit herkömmlichen gerade ausgebildeten Seiten. Da die Zähne der Nebenschneiden in erster Linie als Ausräumverzahnung und zur Reduzierung des Kraftschlags dienen, werden an deren Festigkeit keine so hohen Anforderungen gestellt, wie an die Zähne der Hauptschneide.

Bei einer bevorzugten Ausführungsform liegen nebst den Zähnen der Hauptschneide auch die Zähne der Nebenschneiden auf einer Geraden.

Gemäß der Erfindung weist das Sägeblatt einen abgewinkelten Basisabschnitt auf, an welchem Befestigungsmittel, insbesondere in Form einer Aussparung zum Durchführen einer Spannschraube, angeordnet sind.

Vorzugsweise ist der abgewinkelte Basisabschnitt mit einer Platte des Sägeblatts einstückig ausgebildet und grenzt vorzugsweise, um eine Bruchgefahr zwischen Basisabschnitt und restlichem Sägeblatt zu reduzieren, im stumpfen Winkel an das restliche Sägeblatt an.

Der Basisabschnitt kann insbesondere als Einspannabschnitt dienen, wobei er zumindest teilweise in eine Halterung (nicht dargestellt) eingespannt ist.

Der Basisabschnitt ist vorzugsweise kürzer als das restliche Sägeblatt ausgebildet und weist eine Länge zwischen 5 und 25 mm, bevorzugt zwischen 10 und 20 mm auf.

Bei einer bevorzugten Ausführungsform der Erfindung weist die Hauptschneide 8 bis 35, bevorzugt 10 bis 20 Zähne pro Zoll (25,4 mm) (tpi) auf. Vorzugsweise sind auch die Nebenschneiden mit einer gleichen oder ähnlichen Anzahl an Zähnen pro Länge ausgebildet.

Bei einer bevorzugten Ausführungsform der Erfindung ist die Hauptschneidean einer zumindest abschnittsweise im Wesentlichen rechteckig oder trapezförmig ausgebildeten Platte angeordnet. Durch eine trapezförmige Ausgestaltung kann insbesondere die Breite des Sägeblatts in Richtung der Schneide vergrößert werden. Die Breite der Schneide richtet sich in erster Linie nach dem jeweiligen Anwendungszweck. Es ist aber unerwünscht, wenn eine sehr breit ausgebildete Schneide mit gleichbleibender Breite bis zum Befestigungsabschnitt weiter verläuft, da so das Sägeblatt unnötig hohes Gewicht haben würde, was zu einer übermäßigen Beanspruchung des Antriebswerkzeugs und zu schlechterer Schnittleistung führen kann.

Bei einer bevorzugten Ausführungsform der Erfindung erstrecken sich die Zähne der Nebenschneiden über zumindest 30, vorzugsweise zumindest 50 und besonders bevorzugt zumindest 70 % der Länge des Oszillationssägeblatts. Unter der Länge wird die Länge der Platte verstanden, an welcher die Schneide angebracht ist, mittels der also ein Schnitt in ein Werkstück gesetzt werden kann. Ein lediglich als Befestigungsabschnitt ausgebildeter Teil des Oszillationssägeblatts geht somit nicht in die Länge ein.

Die Nebenschneiden sind vorzugsweise in einem Winkel zwischen 0° und 80°, besonders bevorzugt zwischen 0° und 30° zueinander angeordnet. Es ist somit sowohl ein Werkzeug mit parallelen Seiten als auch ein an der Schneide recht breit ausgebildetes Werkzeug vorgesehen. Zur Reduzierung des Kraftschlags trägt die Erfindung besonders bei kleinen Winkeln, insbesondere bei parallel zueinander angeordneten Seiten bei, da ein solches Sägeblatt verstärkt mit dem zu bearbeiteten Material in Kontakt kommt.

Die Oszillationssäge weist einen Motor mit einer Antriebswelle auf, mittels der das Oszillationssägeblatt in eine oszillierende Schwingung mit geringem Hub versetzt werden kann.

### Beschreibung der Zeichnungen

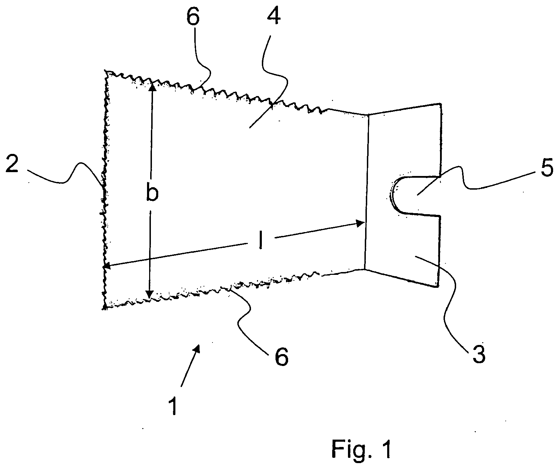

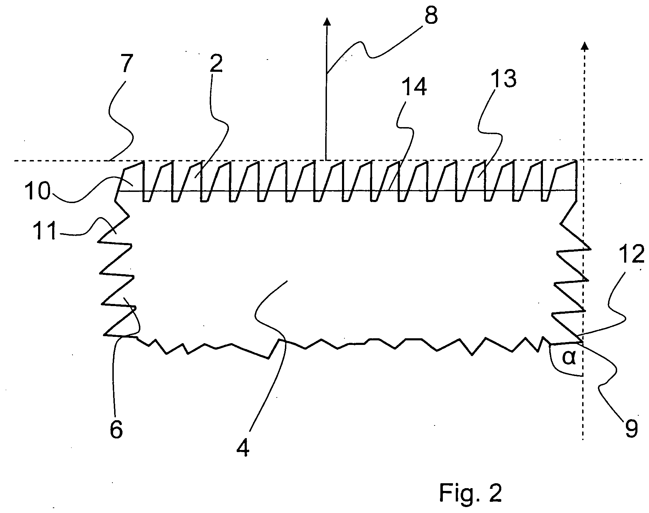

Die Erfindung soll im Folgenden bezugnehmend auf die Zeichnungen Fig. 1 und Fig. 2 anhand eines schematisch dargestellten Ausführungsbeispiels näher erläutert werden.

Fig. 1 zeigt eine schematische perspektivische Ansicht eines Oszillationssägeblatts 1. Das Oszillationssägeblatt 1 umfasst auf einer Seite eine Hauptschneide 2, mittels der stirnseitig zur Hauptschneide 2 Schnitte gesetzt werden können. Die Schnittrichtung verläuft dabei senkrecht zu der Hauptschneide 2, deren Zähne im Wesentlichen entlang einer Geraden angeordnet sind. Zum Schneiden wird das Oszillationssägeblatt 1 über ein Oszillationssägewerkzeug (nicht dargestellt) in eine Schwingung mit geringen Hub versetzt, so dass die Schneide 6 senkrecht zur Schnittrichtung schwingt.

Das Oszillationssägeblatt 1 weist einen abgewinkelten Basisabschnitt 3 auf, welcher seinerseits eine Aussparung 5 aufweist, um das Oszillationssägeblatt einzuspannen.
Im Sinne der Erfindung hat das Oszillationssägeblatt 2 eine Länge 1, welche durch die an die Hauptschneide2 angrenzende Platte 4 definiert ist. Die Platte 4 taucht beim Sägen in das Werkstück (nicht dargestellt) ein. Platte 4 und Basisabschnitt 3 sind in diesem Ausführungsbeispiel einstückig ausgebildet. Der Basisabschnitt 3 kann beispielsweise einen Winkel von etwa 135° zur Platte 4 einnehmen.
Die Breite b des Sägeblatts verringert sich in diesem Ausführungsbeispiel von der Hauptschneide 2 ausgehend zum Basisabschnitt 3. Die Platte 4 ist somit im Wesentlichen trapezförmig ausgebildet.
Gemäß der Erfindung weist das Oszillationssägeblatt 1 an seinen quer zur Hauptschneide 2 verlaufenden Seiten Nebenschneiden 6 auf, welche ebenfalls mit Zähnen versehen sind. Die Zähne der Nebenschneiden 6, welche im Betrieb quer zur Schnittrichtung schwingen, dienen allerdings in erster Linie nicht als zusätzliche Schneiden, um seitlich zur eigentlichen Schnittrichtung schneiden zu können, sondern dienen dem Ausräumen von anfallenden Spänen sowie zur Reduzierung des Kraftschlags beim seitlichen Kontakt des Oszillationssägeblatts 1 mit dem zu bearbeitenden Materials (nicht dargestellt). Es ist zu vermuten, dass die Späne durch die Nebenschneiden 6 weiter zerkleinert und so besser nach hinten abgeführt werden und dass sich die Nebenschneiden seitlich in das zu bearbeitende Material drücken und so den Kraftschlag reduzieren können.
Um auch harte Materialien schneiden zu können, ist die Hauptschneide 2 aus einem härteren Material wie die Platte 4 ausgebildet. Dabei bestehen die Zähne der Schneide 2 aus einem angeschweißten Abschnitt eines härteren Materials, wohingegen die Platte 4 und der Basisabschnitt 3 aus einem Material mit höherer Flexibilität bestehen, wodurch die Bruchgefahr reduziert wird.

Die Herstellung des erfindungsgemäßen Sägeblatts ist nicht zwingend aufwändiger, als die Herstellung eines herkömmlichen Sägeblatts.
Ein derartiges Sägeblatt kann beispielsweise wie folgt beschrieben hergestellt werden.
Zunächst wird ein Rohling (nicht dargestellt) mit den Zähnen der Hauptschneide2 versehen. Insbesondere wird ein Rohling mit einem angeschweißten Hartmetallabschnitt verwendet, in welchen die Zähne der Schneide 2 geschliffen werden.

Bei dem Rohling handelt es sich insbesondere um einen bandförmigen oder um einen rechteckigen Streifen, aus dem eine Mehrzahl von Sägeblättern geformt werden können.

Die einzelnen Sägeblätter werden sodann beispielsweise mittels eines Stanzwerkzeugs oder mittels eines Lasers aus dem Rohling geschnitten. Die Zähne der Nebenschneiden 6 müssen somit nicht aufwändig mittels einer Schleifmaschine geformt werden. Insbesondere beim Ausstanzen weicht lediglich die Form des Stanzwerkzeugs von bekannten Stanzwerkzeugen ab.

Da die Zähne der Nebenschneiden 6 in erster Linie dem Ausräumen von Spänen dienen, ist es unerheblich, dass diese eine geringere Härte aufweisen, als die Zähne der Schneide 2.

Nach dem Vereinzeln des Rohlings in einzelne Sägeblätter werden diese noch einer Härtung, beispielsweise in einem Härteofen, unterzogen.

Bezugnehmend auf Fig. 2, welche eine Detaildarstellung der Spitze eines Oszillationssägeblatts zeigt, sollen weitere Details der Erfindung näher erläutert werden.

In Fig. 2 ist die Platte 4 mit der Schneide 2 zu erkennen. Zumindest die Spitzen der Zähne der Schneide 2 sind entlang einer Geraden 7 angeordnet.

Die Schnittrichtung 8 verläuft im Wesentlichen senkrecht zu der Geraden 7.

Die Zähne der Hauptschneide2 bestehen im oberen Bereich aus einem härteren Material, welches an den Rohling angeschweißt wurde, angedeutet durch die Linie 14.
In diesem Ausführungsbeispiel sind die randseitigen Zähne 10 breiter ausgebildet als die restlichen Zähne der Schneide 2.
Es versteht sich, dass zwischen dem randseitigen Zahn 10 der Schneide 2 und dem angrenzenden Zahn 11 der Nebenschneide 6 ein hinreichender Abstand vorhanden sein muss, so dass an der Ecke des Sägeblatts es nicht zu einer derart starken Materialausdünnung kommt, dass die randseitigen Zähne 10 so geschwächt sind, dass diese zum Abbrechen neigen.
Die hinteren Flanken 9 der Zähne der Nebenschneiden 6 sind, bezogen auf die Seiten des Sägeblatts, steiler ausgebildet als die vorderen Flanken 12.

Dadurch wird Material (nicht dargestellt) bevorzugt nach hinten abtransportiert.
Die hinteren Flanken 9 nehmen vorzugsweise einen Winkel α zwischen 30 und 110°, besonders bevorzugt 50 und 80° zur Schnittrichtung ein.

Durch die Erfindung wird die Schnittleistung einer Oszillationssäge verbessert.

### Bezugszeichenliste

- 1: Oszillationssägeblatt
- 2: Hauptschneide
- 3: Basisabschnitt
- 4: Platte
- 5: Aussparung
- 6: Nebenschneiden
- 7: Gerade
- 8: Schnittrichtung
- 9: Hintere Flanke
- 10: Randseitiger Zahn
- 11: Angrenzender Zahn
- 12: Vordere Flanke
- 13: Spitze
- 14: Linie

## Patentansprüche

1. Oszillationssäge, welche einen Motor mit einer Antriebswelle aufweist, sowie ein Oszillationssägeblatt (1), welches einen 5 bis 25 mm langen abgewinkelten Basisabschnitt (3), an welchem Befestigungsmittel angeordnet sind, und eine Zähne umfassende Hauptschneide (2) umfasst, wobei die Zähne der Hauptschneide (2) auf einer Geraden (7) liegen, wobei das Oszillationssägeblatt (1) an der der Schneide gegenüberliegenden Seite über Mittel zur Befestigung an der Oszillationssäge befestigt ist, welche das Oszillationssägeblatt (1) über die Antriebswelle in oszillierende Schwingung mit geringem Hub versetzt, wobei die Hauptschneide (2) senkrecht zur Schnittrichtung schwingt, und wobei die Schnittrichtung (8) im Wesentlichen senkrecht zur Hauptschneide (2) verläuft,
**dadurch gekennzeichnet, dass** das Oszillationssägeblatt an seinen quer zur Hauptschneide (2) verlaufenden Seiten Zähne umfassende Nebenschneiden (6) aufweist und dass zumindest die Spitzen (13) der Hauptschneide (2) aus einem anderen Material wie das angrenzende Sägeblatt bestehen, wohingegen die Zähne der Nebenschneiden (6) aus demselben Material wie die angrenzende Platte bestehen.

2. Oszillationssäge nach dem vorstehenden Anspruch,
**dadurch gekennzeichnet, dass** die Nebenschneiden (6) eine andere Zahnung wie die Hauptschneide (1) aufweisen.

3. Oszillationssäge nach einem der vorstehenden Ansprüche, **dadurch gekennzeichnet, dass** die Flanken der Nebenschneiden (6) auf der der Schnittrichtung (8) abgewandten Seite steiler ausgebildet sind als auf der der Schnittrichtung (8) zugewandten Seite.

4. Oszillationssäge nach einem der vorstehenden Ansprüche, **dadurch gekennzeichnet, dass** die die Flanken der Nebenschneiden (6) auf der der Schnittrichtung abgewandten Seite in einem Winkel zwischen 30° und 110°, bevorzugt zwischen 50° und 80°, zur Schnittrichtung (8) stehen.

5. Oszillationssäge nach einem der vorstehenden Ansprüche, **dadurch gekennzeichnet, dass** die Zähne der Nebenschneiden (6) auf einer Geraden liegen.

6. Oszillationssäge nach einem der vorstehenden Ansprüche, **dadurch gekennzeichnet, dass** der abgewinkelte Basisabschnitt (3) mit dem restlichen Sägeblatt einen Winkel von 90° bis 150°, bevorzugt von 90° bis 135° bis bildet.

7. Oszillationssäge nach einem der vorstehenden Ansprüche, **dadurch gekennzeichnet, dass** der Basisabschnitt (3) derart ausgebildet ist, dass er zumindest teilweise in eine Halterung einspannbar ist.

8. Oszillationssäge nach einem der vorstehenden Ansprüche, **dadurch gekennzeichnet, dass** der Basisabschnitt (3) eine Länge zwischen 10 und 20 mm aufweist.

9. Oszillationssäge nach einem der vorstehenden Ansprüche, **dadurch gekennzeichnet, dass** die Hauptschneide (2) an einer zumindest abschnittsweise im Wesentlichen rechteckig oder trapezförmig ausgebildeten Platte (4) angeordnet ist.

10. Oszillationssäge nach einem der vorstehenden Ansprüche, **dadurch gekennzeichnet, dass** sich die Zähne der Nebenschneiden (6) über zumindest 30%, vorzugsweise zumindest 50% und besonders bevorzugt zumindest 70 % der Länge des Oszillationssägeblatts (1) erstrecken.

11. Oszillationssäge nach einem der vorstehenden Ansprüche, **dadurch gekennzeichnet, dass** die Nebenschneiden (6) in einem Winkel zwischen 0° und 80° zueinander verlaufen.

## Claims

1. An oscillation saw, comprising:
a motor with a drive shaft; and
an oscillating saw blade (1) comprising an angled base portion (3) having a length from 5 to 25 mm, with fixing means arranged thereon, and a main cutting edge (2) having teeth, wherein the teeth of the main cutting edge (2) are arranged along on a straight line (7),
wherein the oscillating saw blade (1) is fixed to the oscillating saw by fixing means at the side opposite the cutting edge, the oscillating saw causing the oscillation saw blade (1) to oscillate with a small stroke, via the drive shaft, so that the main cutting edge (2) oscillates transversely to the cutting direction (8), and wherein the cutting direction (8) is substantially perpendicular to the main cutting edge (2);
**characterized in that** the oscillating saw blade has secondary cutting edges (6) including teeth on the lateral sides thereof extending transversely to the main cutting edge (2); and that
at least the tips (13) of the main cutting edge (2) are made of a different material than that of the adjacent saw blade, whereas the teeth of the secondary cutting edges (6) are made of the same material as the adjacent plate.

2. The oscillation saw according to the preceding claim, **characterized in that** the secondary cutting edges (6) have a different toothing than the main cutting edge (2).

3. The oscillation saw according to any one of the preceding claims, **characterized in that** the flanks of the secondary cutting edges (6) are steeper on the side facing away from the cutting direction (8) than on the side facing the cutting direction (8).

4. The oscillation saw according to any one of the preceding claims, **characterized in that** the flanks of the secondary cutting edges (6) on the side facing away from the cutting direction extend at an angle between 30° and 110°, preferably between 50° and 80° to the cutting direction (8).

5. The oscillation saw according to any one of the preceding claims, **characterized in that** the teeth of the secondary cutting edges (6) are arranged along a straight line.

6. The oscillation saw according to any one of the preceding claims, **characterized in that** the angled base portion (3) forms an angle from 90° to 150°, preferably from 90° to 135° with the rest of the saw blade.

7. The oscillation saw according to any one of the preceding claims, **characterized in that** the base portion (3) is designed so that it can be clamped in a holder, at least partially.

8. The oscillation saw according to any one of the preceding claims, **characterized in that** the base portion (3) has a length between 10 and 20 mm.

9. The oscillation saw according to any one of the preceding claims, **characterized in that** the main cutting edge (2) is provided on a plate (4) that has a substantially rectangular or trapezoidal shape, at least portions thereof.

10. The oscillation saw according to any one of the preceding claims, **characterized in that** the teeth of the secondary cutting edges (6) extend over at least 30 %, preferably at least 50 %, and more preferably at least 70 % of the length of the oscillation saw blade (1).

11. The oscillation saw according to any one of the preceding claims, **characterized in that** the secondary cutting edges (6) extend at an angle between 0° and 80° to each other.

## Revendications

1. Scie à oscillations, laquelle comprend un moteur pourvu d'un arbre d'entraînement, ainsi qu'une lame de scie à oscillations (1), laquelle comporte une section de base (3) coudée d'une longueur de 5 à 25 mm, sur laquelle des moyens de fixation sont agencés, et un tranchant principal (2) comprenant des dents, où les dents du tranchant principal (2) sont situées sur une ligne droite (7), dans laquelle la lame de scie à oscillations (1) est fixée par l'intermédiaire de moyens de fixation sur la face opposée au tranchant sur la scie à oscillations, laquelle entraîne la lame de scie à oscillations (1), par l'intermédiaire de l'arbre d'entraînement, en vibration oscillante avec une faible course, dans laquelle le tranchant principal (2) vibre perpendiculairement au sens de coupe, et dans laquelle le sens de coupe (8) s'étend sensiblement perpendiculairement au tranchant principal (2),
**caractérisée en ce que** :
la lame de scie à oscillations présente sur ses faces s'étendant transversalement au tranchant principal (2) des tranchants secondaires (6) comportant des dents et **en ce qu'**au moins les pointes (13) du tranchant principal (2) sont constituées d'un autre matériau que celui de la lame de scie adjacente, tandis que les dents des tranchants secondaires (6) sont constituées du même matériau que celui de la plaque adjacente.

2. Scie à oscillations selon la revendication précédente, **caractérisée en ce que** les tranchants secondaires (6) présentent une autre denture que celle du tranchant principal (1).

3. Scie à oscillations selon l'une quelconque des revendications précédentes, **caractérisée en ce que** les flancs des tranchants secondaires (6) sont plus escarpés sur la face opposée au sens de coupe (8) que sur la face tournée vers le sens de coupe (8).

4. Scie à oscillations selon l'une quelconque des revendications précédentes, **caractérisée en ce que** les flancs des tranchants secondaires (6) sur la face opposée au sens de coupe se situent selon un angle compris entre 30° et 110°, de préférence entre 50° et 80°, par rapport au sens de coupe (8).

5. Scie à oscillations selon l'une quelconque des revendications précédentes, **caractérisée en ce que** les dents des tranchants secondaires (6) se situent sur une ligne droite.

6. Scie à oscillations selon l'une quelconque des revendications précédentes, **caractérisée en ce que** la section de base (3) coudée forme avec le reste de la lame de scie un angle de 90° à 150°, de préférence de 90° à 135°.

7. Scie à oscillations selon l'une quelconque des revendications précédentes, **caractérisée en ce que** la section de base (3) est conçue de telle manière qu'elle peut être serrée au moins en partie dans un élément de retenue.

8. Scie à oscillations selon l'une quelconque des revendications précédentes, **caractérisée en ce que** la section de base (3) présente une longueur comprise entre 10 et 20 mm.

9. Scie à oscillations selon l'une quelconque des revendications précédentes, **caractérisée en ce que** le tranchant principal (2) est agencé sur une plaque (4) sensiblement rectangulaire ou trapézoïdale au moins sur certaines sections.

10. Scie à oscillations selon l'une quelconque des revendications précédentes, **caractérisée en ce que** les dents des tranchants secondaires (6) s'étendent sur au moins 30 %, de préférence au moins 50 %, et de manière particulièrement préférée au moins 70 % de la longueur de la lame de scie à oscillations (1).

11. Scie à oscillations selon l'une quelconque des revendications précédentes, **caractérisée en ce que** les tranchants secondaires (6) s'étendent les uns par rapport aux autres selon un angle compris entre 0° et 80°.
